Europäisches Patentamt

European Patent Office

Office européen des brevets

(11) Publication number: **0 068 825**
A1

# EUROPEAN PATENT APPLICATION

(21) Application number: **82303301.4**

(22) Date of filing: **24.06.82**

(51) Int. Cl.³: **B 23 B 31/10**

(30) Priority: **30.06.81 GB 8120212**

(43) Date of publication of application: **05.01.83**
**Bulletin 83/1**

(84) Designated Contracting States: **AT BE CH DE FR GB IT
LI LU NL SE**

(71) Applicant: **Caspi, Amos, 38 Kent Road, Highland Harare
(RH)**

(72) Inventor: **Rawlins, Derek Raymond, 29 Bushey Road,
London E13 (GB)**
Inventor: **Jayne, Andrew Kenneth, 13 Dorset Road,
Maldon Essex (GB)**

(74) Representative: **Wilson, Nicholas Martin et al, WITHERS
& ROGERS 4 Dyer's Buildings Holborn, London.
EC1N 2JT (GB)**

(54) **Jaw assembly having a jaw usable with a chuck.**

(57) Each jaw (30) of a set of jaw assemblies for a chuck is shaped to provide a locating tongue (13) and a threaded hole to accept a bolt (25). An adapter block (40) has a bottom surface (18) shaped to provide three intersecting slots (17), any one of which slots is engageable by the tongue (13) of the jaw (30). The adapter block (40) is hexagonal and the bolt (25) secures the adapter block (40) to the jaw (30) in one of six different orientations. In use in a chuck, the adapter blocks grip the workpieces. Recesses (19, 20 and 21) of different shapes can be machined in the adapter blocks (40) to allow different shapes of workpieces to be held.

JAW ASSEMBLY HAVING A JAW
USABLE WITH A CHUCK

0068825

## Background of the Invention

### Field of the Invention

The invention relates to jaw assemblies for chucks and, more particularly though not exclusively, to jaw assemblies having soft jaws for self-centering chucks for use on lathes, soft jaws being a term used to refer to jaws of a metal such as mild steel which is softer than a workpiece to be held.

### Description of the Prior Art

A chuck is used to mount a workpiece for turning on a lathe. A common form of chuck is one which has a number of jaws which can be adjusted radially inwardly or outwardly to clamp a workpiece. Self-centering chucks have usually three jaws which are commonly arranged to advance concentrically by means of a scroll, although other means of advancement may be used. Self-centering chucks are used whenever possible, therefore, since a lathe operator needs a minimum of time and skill in setting up a fresh workpiece for machinery.

Furthermore, it is common for the soft jaws of a chuck on a lathe to be modified by machining in such a way as to suit a particular batch of components to be machined, and repetition of such machining operations will rapidly wear away the soft jaws.

- 2 -

It has been proposed to secure blocks of metal, for example by welding, onto the soft jaws of a chuck in order either to effect a repair to the soft jaws or to enable the jaws to accommodate a special batch of work. Such modifications involve undesirable machine downtime, and where welding is concerned, can only be carried out a limited number of times before the soft jaws have to be replaced. Furthermore, no advantage can be gained from carrying out such modifications in terms of improving the versatility of the chuck for handling a variety of workpieces.

## Summary of the Invention

According to the present invention there is provided a set of jaw assemblies for a chuck for holding a workpiece, each jaw assembly comprising a jaw, adapter means mountable on the jaw in a plurality of different orientations, and means for securing each adapter means to the associated jaw in a selected one of said plurality of different orientations, the arrangement being such that, in use in a chuck, a workpiece may be clamped between the adapter means of the jaws.

Means may be provided for registering each adapter means on the associated jaw in a selected one of the plurality of different orientations. The registering means may comprise a locating tongue on one of each adapter means or the associated jaw, and a plurality of slots on respectively the other of each adapter means or the associated jaw, the locating tongue being engageable in any one of the plurality of slots.

-3-

The locating tongues are preferably provided on the jaws and the slots are preferably provided on the adapter means. Each adapter means may comprise three elongate slots, each adapter means being mountable on the associated jaw in six different orientations.

Alternatively, the registering means may comprise a plurality of holes in adapter means, a hole in the associated jaw and pin means engageable in the hole in the jaw and one of said plurality of holes in the adapter means.

The means for securing each adapter means on the associated jaw may comprise a threaded bolt.

Each adatper means may comprise a block of regular cross-section and the block is preferably of hexagonal cross-section.

The invention further provides a chuck for a lathe comprising a set of jaws according to the invention.

The invention, and its objects and advantages, will become more apparent in the detailed description of the preferred embodiments hereinafter presented.

Brief Description of the Drawings

One embodiment of jaw assemblies having soft jaws according to the invention will now be described, by way of example, with reference to the accompanying drawings, in which:

Figure 1 is a side view of one embodiment of a soft jaw according to the invention;

Figure 2 is an end view of the soft jaw shown in Figure 1;

Figure 3 is an underneath plan view of one embodiment of an adapter block for a soft jaw according to the invention;

Figure 4 is a side view of the adapter block shown in Figure 3;

Figure 5 is an exploded view of a jaw assembly combining the soft jaw and the adapter block shown in Figures 1 to 4; and

Figure 6 shows diagrammatically a self-centering chuck comprising a set of jaw assemblies having jaws and blocks according to the invention.

## Description of the Preferred Embodiments

Because chucks with soft jaws are well-known, the present description will be directed in particular to elements forming part of, or cooperating more directly with, the present invention. Elements not specifically shown or described herein are understood to be selectable from those known in the art.

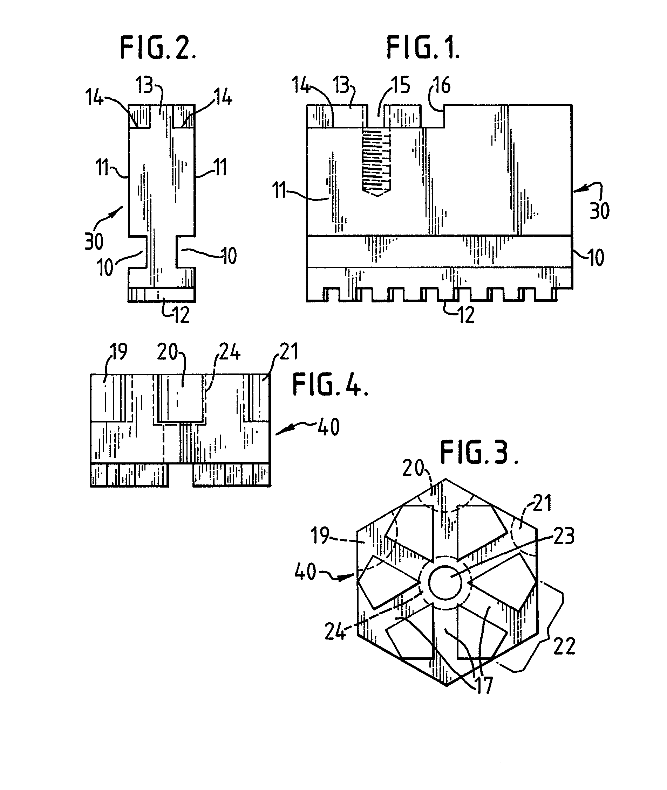

Figures 1 and 2 show a soft jaw 30 for a self-centering, or scroll chuck. The jaw 30 is made of mild steel and has a pair of longitudinal grooves 10, each extending over the length of each flank 11 of the jaw. On the under side of the jaw 30 is machined a set of square-profile teeth 12.

The jaw 30 shown in this embodiment is for slidably mounting in a radial slot in a scroll chuck. The radial slot in the chuck is provided with a pair of elongate ribs, each of which complementarily engages each of the grooves 10 in the jaw. Rotatably mounted in the chuck is a plate having a raised spiral or scroll machined on it, and the set of teeth 12 on the jaw meshingly engages with the scroll of the chuck. The scroll can be located in the chuck by means of a key, thus moving the jaw radially inwardly or outwardly on the chuck.

The top side of the jaw 30 is machined to form a locating tongue 13, a load bearing surface 16 and a seating surface 14. A hole 15 is drilled down into the jaw 30 through the locating tongue 13, and the jaw 30 is tapped to receive a threaded bolt.

An adapter block 40, as shown in Figures 3 and 4, is shaped to fit onto the machined part of the jaw shown in Figures 1 and 2. The illustrated embodiment of the adapter block 40 is of regular hexagonal cross-section and is made conveniently from standard hexagonal mild steel bar. Three slots 17 are dimensioned so that each slot fits snugly over the locating tongue 13 of the jaw. The slots 17 are arranged in alignment with opposing corners of the block, and in these regions, the bottom surface of the block is machined to form six lands 22. These lands 22 lie perpendicular to their respective slots 17 and are intended to abut the load bearing surface 16 of the jaw 30 when the parts are assembled.

A clearance hole 23 for the shank of a threaded bolt is drilled through the axis of the block 40, and an upper portion of the hole is conveniently counterbored at 24 to accept the head of a cap screw. When the parts are assembled, the holes in the respective parts line up so that a cap screw can be tightened down to fasten the parts together.

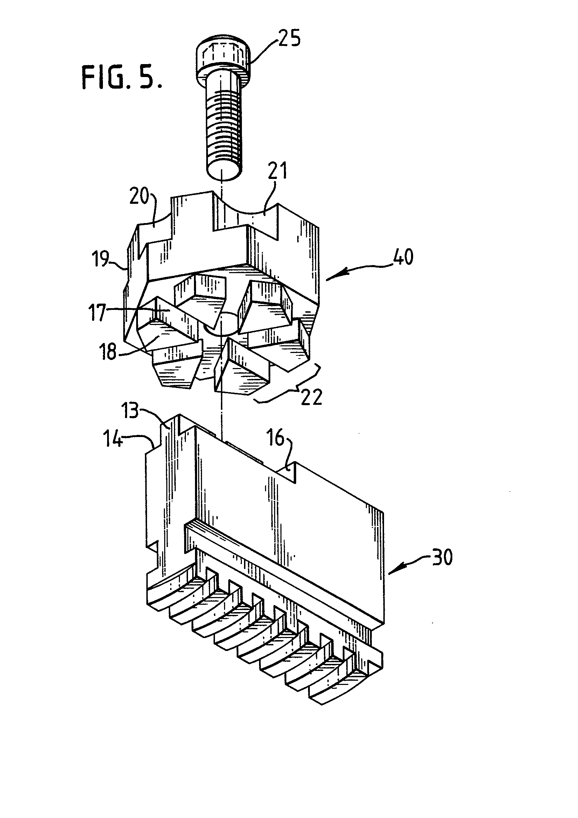

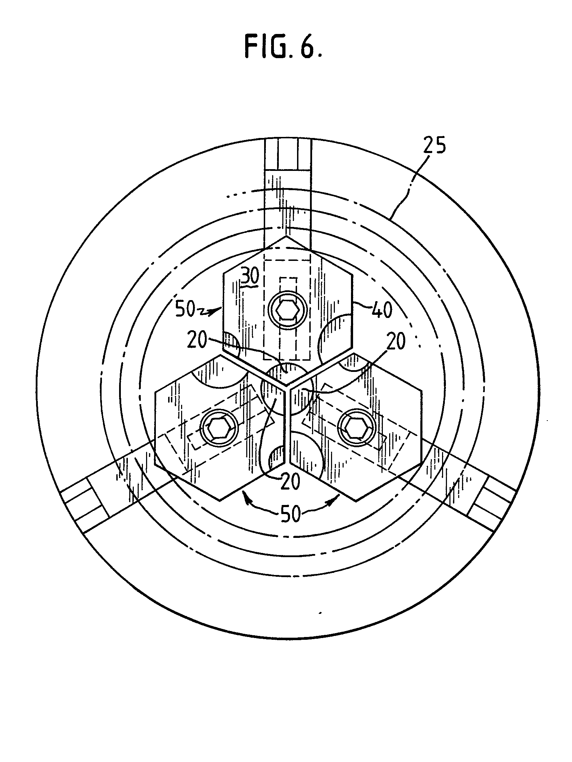

Three of the corners of the block 40 shown in this embodiment have been specially machined to form part-circular recesses 19, 20 and 21. The purpose of these recesses will become clearer with reference to Figures 5 and 6.

Figure 5 shows how the block 40 is assembled onto the jaw 30 in this embodiment of a jaw assembly 50 according to the present invention. One of the grooves 17 in the block 40 registers on the locating tongue 13 of the jaw 30, and a cap screw 25 is used to secure the parts together. The bottom surface 18 of the block 40 is clamped down onto the seating surface 14 of the jaw 30 by tightening up the respective cap screws. It will be apparent that there are six possible ways of arranging the block 40 on the jaw 30. In each case, the block 40 is positively registered and can be securely fastened on the jaw 30, and the design is such that in each case, one corner of the block projects forwardly of the front endface of the jaw 30. The reason for this will be apparent from the description relating to Figure 6.

Figure 6 shows a set of three jaws 30 and blocks 40 of this embodiment of the invention mounted on a scroll chuck. Each block 40 has been arranged on its respective jaw such that the operative corner of each block has an identical part-circular recess, in this case, 20.

When the scroll (indicated diagrammatically by a chain-dotted spiral 25) is rotated by means of a key, the jaws advance concentrically to clamp a workpiece in the recesses 20 in the blocks 40. To change over the blocks from one job to the next, each cap screw is loosened to enable the blocks to be lifted and turned to their new stations, where the cap screws are once again tightened down to fasten the blocks onto the jaws in their appropriate positions. It will be apparent also from Figure 6 that the jaws of the chuck are capable of clamping very small components between the blocks.

It will be appreciated that, in contrast to the previously described embodiment, the tongue may be provided on the jaw. It will also be appreciated that means other than tongues and slots may be provided for registering the block on the jaw. For example, the block may have six holes arranged in a pitched circle around the central bolt hole, in which case the jaw may have a single hole for receiving a dowel pin in one of the six holes. Alternatively, two tapped holes may be provided in the jaw for receiving a pair of threaded bolts through any one pair of six angularly spaced pairs of clearance holes provided in a pitched circle around the axis of the block.

It will further be appreciated that the blocks for mounting on the jaws of a chuck need not necessarily be of hexagonal cross-section, and that suitably shaped blocks may equally well be provided for either self-centering or independent chucks having more or less than three jaws.

In addition, the jaws of chucks which are available as standard parts may be modified in order to accept any of the blocks described above, and it is not essential that the jaws of a chuck thus modified should be removable from the chuck.

The advantages of this embodiment of jaws according to the invention are that considerable expense is saved because the time taken for changing over from one job to the next is minimized. Up to six different recesses may be machined in the block in order to accomodate six special machining jobs, and this considerably reduces the need for large stacks of spare parts.

Previously, specific embodiments of the present invention have been described. It should be appreciated, however, that these embodiments have been described for the purposes of illustration only, without any intention of limiting the scope of the present invention. Rather, it is the intention that the present invention be limited only by the appended claims.

0068825

What Is Claimed Is:

1.    A set of jaw assemblies for a chuck for holding a workpiece, each jaw assembly comprising a jaw; adapter means mountable on the jaw in a plurality of different orientations; and means for securing each adapter means to the associated jaw in a selected one of said plurality of different orientations, the arrangement being such that, in use in a chuck, a workpiece may be clamped between the adapter means secured to the jaws.

2.    A set of jaw assemblies as claimed in Claim 1 further comprising means for registering each adapter means on the associated jaw in a selected one of the plurality of different orientations.

3.    A set of jaw assemblies as claimed in Claim 2, wherein the registering means comprises a locating tongue on one of said adapter means and the associated jaw, and a plurality of slots provided on the other of said adapter means and the associated jaw, the locating tongue being engagable in any one of said plurality of slots.

4.    A set of jaw assemblies as claimed in Claim 3, wherein the locating tongues are provided on the jaws and the slots are provided on the adapter means.

5.    A set of jaw assemblies as claimed in Claim 4, wherein each adapter means comprises three elongate slots, each adapter means being mountable on the associated jaw in six different orientations.

6.    A set of jaw assemblies as claimed in Claim 2, wherein the registering means comprises a plurality of holes in each adapter means, a hole in the associated jaw, and pin means engagable in the hole in the jaw and one of said plurality of holes in the adapter means.

7.  A set of jaw assemblies as claimed in any preceding claim, wherein the means for securing each adapter means on the associated jaw comprises a threaded bolt.

8.  A set of jaw assemblies as claimed in any one of Claims 1 to 6, wherein each adapter means comprises a block of regular cross-section.

9.  A set of jaw assemblies as claimed in Claim 8, wherein the block is of hexagonal cross-section.

10.  A set of jaw assemblies comprising:

a plurality of jaws, each jaw having a portion thereof shaped for engagement with a complementary shaped portion of a chuck to thereby mount the jaw on the chuck;

a plurality of blocks mountable on respective ones of said jaws, each of said blocks having a first portion thereof shaped for engagement with a workpiece so that the jaw assemblies cooperate with each other to clamp the workpiece, and a second portion for mounting the block on the jaw in one of a plurality of different orientations; and

means for securing the blocks to the jaws so that each block is secured to its associated jaw in one of said plurality of different orientations.

11.  A set of jaw assemblies according to Claim 10, wherein each jaw has a seating surface and a locating tongue extending away from the seating surface, and wherein each block has a bottom surface formed with a plurality of slots, said tongue being received in one of said slots to thereby orientate the block with respect to the jaw.

12. A chuck for holding a workpiece comprising:

a chuck having a plurality of radial slots formed therein;

a plurality of jaws, each jaw having a portion thereof positioned in one of said radial slots to thereby mount the jaw in the slot;

a plurality of blocks, one of said blocks being mounted on each of said jaws, confronting surfaces of said jaws and said blocks being shaped so that the block is mounted on the jaw in one of a plurality of different orientations; and

means for releasably securing each of said blocks to its associated jaw in one of the plurality of different orientations, said jaws being movable from spaced apart positions towards each other into positions in which the blocks cooperate with each other to hold a workpiece.

FIG.2.

14   13   14
11   11
30
10   10
12

FIG.1.

14   13   15   16
11
30
10
12

19   20   24   21

FIG.4.

40

FIG.3.

20
21
19
23
40
24
22
17

FIG. 5.

25

20    21

19

17

18    22

40

13

14    16

30

FIG. 6.

European Patent
Office

**EUROPEAN SEARCH REPORT**

Application number

EP 82 30 3301.4

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | US - A - 2 896 958 (C.E. STRAUSS) <br> * complete document * <br> -- | 1-5,7, 8,10-12 | B 23 B 31/10 |
| X | FR - A - 1 152 665 (R. BENEDETTO) <br> * complete document * <br> -- | 1,2,6, 7,9,10, 12 | |
| X | FR - A - 2 040 517 (C. PIERRISNARD) <br> * complete document * <br> -- | 1-3,7, 9,10 | |
| X | US - A - 2 950 117 (I.D. WALMSLEY) <br> * claim 1; column 3, lines 14 to 50; fig. 1 to 13 * <br> -- | 1,2,6, 7,10,12 | **TECHNICAL FIELDS SEARCHED (Int.Cl.3)** <br><br> B 23 D 31/10 |
| X | US - A - 3 179 430 (F.P. ZIERDEN) <br> * claim 1; fig. 1 to 9 * <br> ---- | 1,2,7, 10,12 | |

CATEGORY OF
CITED DOCUMENTS

X: particularly relevant if
taken alone
Y: particularly relevant if
combined with another
document of the same
category
A: technological background
O: non-written disclosure
P: intermediate document
T: theory or principle
underlying the invention
E: earlier patent document,
but published on, or after
the filing date
D: document cited in the
application
L: document cited for other
reasons

&: member of the same patent
family,
corresponding document

The present search report has been drawn up for all claims

| Place of search | Date of completion of the search | Examiner |
|---|---|---|
| Berlin | 13-09-1982 | MARTIN |

EPO Form 1503.1  06.78